# EUROPEAN PATENT APPLICATION

(11) **EP 4 198 970 A1**
(43) Date of publication of application: **21.06.2023**
(21) Application number: 21383161.3
(22) Date of filing: 20.12.2021
(51) Int. Cl.: G10L 15/22, G06F 3/16, G10L 15/08

(54) **COMPUTER IMPLEMENTED METHOD FOR DETERMINING FALSE POSITIVES IN A WAKEUP-ENABLED DEVICE, CORRESPONDING DEVICE AND SYSTEM**

(71) Applicant: Samsung Electronics Co., Ltd., Gyeonggi-do 16677 (KR)
(72) Inventor: Franco Pedroso, Javier, 28039 Madrid (ES); Escudero Barrero, Álvaro, 28703 San Sebastián de los Reyes (ES); Massam Hidalgo, Raúl, 28430 Alpedrete (ES)
(74) Representative: Appleyard Lees IP LLP

(57) **Abstract**

Computer implemented method for determining false positives in a wakeup-enabled device, corresponding device and system. The wakeup-enabled device (1) is configured to detect wakeup words (100) from a first audio data of an audio input. The wakeup-enabled device is further configured, for each detection, for emitting at least one outbound request for data (103), and, in the case of receiving at least one inbound response (104) comprising second audio data that has been played by an external device (3), for each inbound response (104):
- comparing a first audio fingerprint pattern of said first audio data with a second audio fingerprint pattern of said second audio data, thus obtaining a comparison value;
- if said comparison value surpasses a predefined threshold, determining a false positive and therefore rejecting said detection of said wakeup word (100).

## Description

### Field of the invention

The invention lies in the field of devices that are activated by a user by means of a wakeup word. Non-limiting examples of said type of devices are smart speakers, smart TVs, smartphones, smartwatches, or the like.

In particular, the invention relates to a computer implemented method for determining false positives in a wakeup-enabled device having an audio input, said device configured for obtaining first audio data from said audio input and detecting a wakeup word from said first audio data. Wakeup words are known in the art, and the designation generally refers to short voice fragments that are used for starting the interaction with a device. Even if the term "word" is commonly used, it is not necessary for the fragment to actually be a word, it is common to use a combination of short words or any other short voice utterances. The interaction may be of varied nature, non-limiting examples are a dialog with an Al-powered assistant, or simply uttering small commands like "play music", "turn-off the lights", etc. The computing means necessary for executing the method may be comprised in the wakeup-enabled device itself or outside of said device. Distributed computing means may also be envisaged, so that part of the method is done by computing means comprised in the device and another part of the method using external computing means.

The invention also relates to the corresponding wakeup-enabled device and system.

### Prior art

Wakeup-enabled devices have the common problem that the interaction can be activated unintentionally if the wakeup word is uttered by another person or by an audio source located nearby. This is particularly relevant, for example, when the wakeup word is very commonly used in the daily language or in the media.

These unwanted activations are normally referred as "false positives": the wakeup word is detected by the device, but it has not been uttered by the user of said device.

Some strategies have been implemented in order to minimize false positives in wakeup devices, for example, using uncommon wake-up words that are pre-defined by the manufacturer. This strategy limits the possibility that the wake-up word is used in real life. Therefore, in these cases the main source of false positives is due to the media, for example due to advertising in television or in radio broadcasts. In these cases, a server receives multiple simultaneous detections by multiple devices, even from different users, and determines that those detections are false positives. Nevertheless, this kind of strategy does not allow that a user selects his/her own wake-up word, and it relies on an external server for the determination of false positives.

Another example of strategy uses models that adapt to the particular voice of the user. This type of approach requires training iterations but can be very accurate, especially for long utterances. In the case of short wakeup words, the accuracy is generally lower and there is a great variability among users. Besides, training may be considered tedious by the users, in particular when it must be done for each individual user of the device, for example, in the cases like a smart speaker or a smart TV where the device is often shared by different users. Moreover, some users are reluctant to use biometrical trainings at all, not only because they perceive it as a tedious process, but also because of concerns about privacy of biometrical data. In addition, the complex systems required for this type of solutions may have high development costs.

Therefore, it is needed a method for minimizing the false positives in a wakeup-enabled device that overcomes the aforementioned problems, namely the requirement of an external server for determining false alarms caused by media, and the impossibility of determining them in case of customized wakeup words.

### Summary of the invention

The invention is aimed to provide a method for determining false positives in a wakeup-enabled device of the type stated at the beginning, being able to avoid the problems that have been identified above.

This purpose is achieved by a computer implemented method for determining false positives coming from nearby, audio-emitting devices in a wakeup-enabled device of the type indicated at the beginning, characterized in that, for each detection of said wakeup word by said device, the method comprises the following steps:
- emitting at least one outbound request for data;
in the case of receiving at least one inbound response to said at least one request, each inbound response comprising second audio data corresponding to audio that has been played by an external device, for each of said at least one inbound response:
- comparing a first audio fingerprint pattern of said first audio data with a second audio fingerprint pattern of said second audio data, thus obtaining a comparison value;
- if said comparison value surpasses a predefined threshold, determining a false positive and therefore rejecting said detection of said wakeup word.

Therefore, when the wakeup-enabled device detects the wakeup word, it emits one or more outbound requests, said request(s) may be received by other nearby devices, in particular, for nearby audio-emitting devices. In the context of this document, and unless otherwise specified, the terms "outbound" and "inbound" are relative to the wakeup-enabled device. Said audio-emitting devices are a possible source of false positives in the case that they play audio segments containing the wakeup word. Each external device that responds also sends audio data corresponding to the audio that has been recently played by the device. The wakeup-enabled device then compares the audio with the audio that the wakeup-enabled device has detected as the wakeup word. In particular, it compares audio features of each audio, that correspond to an audio fingerprint pattern, AFP. Several options for AFP extraction are known in the art and some will be discussed later in this document. In the context of this document raw audio data refers to audio in digital format containing the samples of an audio wave, for example, using a linear PCM format, or different audio codecs known in the art. The advantage of using AFP instead of the raw audio is that AFP is a compressed representation of audio data which only comprises the relevant information for the target task. Different comparison methods for two AFP may be envisaged and some of them will be discussed later in this document. The result of the comparison is a value that is compared with a predefined threshold in order to determine if the audio "listened" by the wakeup-enabled device, the first audio, is the same that the audio played by the external device, the second audio. In this case, the method determines that the detection of the wakeup word is a false positive and that can be discarded, so the wakeup-enabled device ignores said wakeup word. A comparison is done for each external device that sends a response, so different external audio sources may be considered, even if any of said comparisons may use a different AFP extraction method and a different comparison method. This way, the method of the invention is capable of determining false positives coming from external audio-emitting devices, thus minimizing the impact of said false positives.

Preferably, said second audio data comprises the audio data corresponding to the 5 seconds or less before said inbound response, more preferably the last 2 seconds, so that the short utterances corresponding to the wakeup word can be included in that audio data, and, at the same time, the amount of data transmitted can be minimized.

Preferably, emitting said at least one outbound request for data and/or receiving at least one inbound response is done by means of a wireless data communication system, more preferably Bluetooth LE, Wi-Fi Direct or LTE Direct, so that the external devices that send the data do not have to be physically connected to the wakeup-enabled device. This embodiment has several advantages: first, it allows to communicate with devices that do not belong to the user, for example, with a smart TV of a neighbour. Second, it effectively delimits the area of the nearby external devices to the area covered by the wireless communication system. Third, no specific configuration is needed for the setup of the wakeup-enabled device and the neighbouring sources of audio.

Preferably, said at least one outbound request for data comprises a broadcast request for data, so that the outbound request is broadcasted and can be responded by any suitable external device that receives said outbound request, even without the need of a registration process between the responding devices and the wakeup-enabled device.

Preferably, the method further comprises:
- at least one external device establishing a communication with said wakeup-enabled device; and
- said wakeup-enabled device determining said external device as a registered external device, thereby determining at least one registered external device.

This registration process will also be referred in the document as *peer discovery,* and it is preferably initiated by the wakeup-enabled device sending broadcast request for registration, so that the external devices in range for receiving said request for registration may establish said communication used for registration. Said communication may comprise, for example, a connection attempt, a pairing request, or a more complex interaction between the wakeup-enabled device and the external device suitable for the type of channel that is used. It has the advantage that the wakeup-enabled device is able to register which devices among the possible devices in the neighbourhood are effectively emitting audio that can cause false positives. In addition, it may contribute to improve the security, since it is possible to limit the external devices able to register to those pertaining to the user. A further advantage is that, for registered external devices, it is possible to store information that may be used latter during operation. An example of this information will be disclosed later in this document regarding the audio capabilities of the external devices.

Preferably, said at least one outbound request for data comprises an outbound request for data to each of said at least one registered external device, so that the wakeup-enabled device sends the outbound request for data to any of the registered devices. This particular embodiment is also compatible with the possibility to also send a broadcast request for data.

Preferably, said wakeup-enabled device is further configured for storing information about the audio capabilities of each of said registered external devices. The information may be received during the peer discovery process, or in a latter moment, even during the response of the outbound request for audio data. One of the main advantages of having this information is that it becomes possible to take into consideration the characteristics of the audio that will be sent by the external device and received by the wakeup-enabled device. Preferably, the information about the audio capabilities comprises at least the possible format or formats of said second audio data that said registered external device is able to send.

A non-limiting example of the format is raw audio. In the context of this document, the term "raw audio" refers to data that represents the waveform of the audio itself. Therefore, raw audio may be encoded according to different formats, for example, uncompressed formats like Linear Pulse Code Modulation (LPCM), or compressed formats like MP3. Other possible formats of the audio data may contain processed data that facilitate the step of obtaining an audio fingerprint or, preferably, processed data that can be directly used as an audio fingerprint. Non-limiting examples of the latter are audio formats like Mel-frequency Cepstral Coefficients (MFCC), Linear Prediction Coefficients (LPC), Perceptual Linear Prediction (PLP) or relevant pairs of spectral peaks obtained by Landmark Extraction. The aforementioned formats are known in the art so, for the sake of brevity, they will not be described herein except for a brief introduction to each one:
- Mel-frequency Cepstrum Coefficients, MFCC, is a representation of the short-term power spectrum of a sound, based on a linear cosine transform of a log power spectrum on a nonlinear Mel scale of frequency.
- Linear Prediction Coefficients, LPC, represent the vocal tract parameters through Linear Prediction analysis, which assumes that a speech sample can be approximated as a linear combination of past samples.
- Perceptual Linear Prediction, PLP, is a combination of both spectral analysis and linear prediction analysis that uses concepts from the psychophysics of hearing to derive an estimate of the auditory spectrum.
- Landmark Extraction is based on salient peaks in a spectrogram that can be defined as the local maxima along time and frequency. Salient peaks are identified and paired to form the so-called landmarks. This technique is often applied as an audio fingerprinting and used to identify audio, for example, in the identification of songs.

Knowing the possible formats of the audio data available for the external device makes possible for the wakeup-enabled device to inform the external device (for example, in the outbound request for audio data) to use a specific format. In the latter case, processed audio formats are advantageous because they comprise condensed information so that the size of the second audio data stream needed for the transmission decreases. A further advantage in the case of audio formats that can be used as fingerprints is that the audio data received by the wakeup-enabled device comprises information that can be directly used for comparison, thus minimizing the computational cost required by the wakeup-enabled device and further decreasing latency due to the audio fingerprint computation. In the cases that the external device is only capable to send raw audio (i.e., it is not capable of computing audio fingerprints), the step of obtaining the second audio fingerprint may be done by the wakeup-enabled device.

Preferably, said communication between said wakeup-enabled device and said at least one external device uses data protection, in order to improve confidentiality of the data. Preferably said communication comprises at least an authentication method, more preferably, ITU-T X.509 certificate exchange over encrypted communications channel.

Preferably, said first audio fingerprint pattern and said second audio fingerprint pattern are both obtained by means of a feature extraction method for audio, preferably one of:
- Mel-frequency Cepstral Coefficients, MFCC;
- Linear Prediction Coefficients, LPC;
- Perceptual Linear Prediction, PLP;
- Profiles of energy and/or fundamental frequency of audio frames;
- Relevant pairs of spectral peaks obtained by Landmark Extraction;
- Audio fingerprints obtained from a neural network; and
- Audio embeddings, preferably, i-vector or d-vector;
wherein the feature extraction method is the same for obtaining said first audio fingerprint pattern and for obtaining said second audio fingerprint pattern.

Therefore, both same method is used for obtaining the first and second audio fingerprint patterns, so that they can be compared afterwards. The methods disclosed herein are examples of the current state of art in audio fingerprinting and have been found to produce reasonable results in the moment that this document has been created. Other equivalent feature extraction methods may be developed or used according to the evolution of the art.

Preferably, independently for each of said at least one inbound response, said second audio fingerprint pattern may be comprised in said second audio data or obtained by said wakeup-enabled device from said second audio data after the reception of said second audio data. When the second audio fingerprint pattern is comprised in the second audio data the computation cost is distributed among the devices. Several alternatives may be envisaged, for example, the external device may be pre-configured to send the second audio data containing the second audio fingerprint pattern or may be instructed by the wakeup-enabled device, for example, in the outbound request for data. When the second audio fingerprint pattern is not comprised in the second audio data, it must be obtained by the wakeup-enabled device. This is particularly advantageous in the cases where the external device is not able to send processed audio, for example, due to computation limitations. In this example, the external device may send raw audio and the wakeup-enabled device will process that raw audio in order to obtain the second audio fingerprint pattern.

Preferably, comparing said first audio fingerprint pattern with said second audio fingerprint pattern is done by means of a method for measuring similarity between two temporal sequences or audio segments. A non-limiting example of this type of method is known as Dynamic Time Warping, DTW, which is a method known in the art for measuring similarity between two temporal sequences, or any of its variants, thus allowing to find a temporal sequence as a subsequence of a larger one.

The invention also refers to a wakeup-enabled device comprising:
- an audio input;
- a communication module;
- a control means;
wherein said control means is configured for:
- receiving first audio data from said audio input; and
- detecting a wakeup word from said first audio data;
characterized in that said control means is further configured for:
- for each detection of said wakeup word driving said communication module to emit at least one outbound request for data; and
- in the case that said communication module receives at least one inbound response to said at least one outbound request for data, each inbound response comprising second audio data corresponding to audio that has been played by an external device, for each of said at least one inbound response:
   - comparing a first audio fingerprint pattern of said first audio data with a second audio fingerprint pattern of said second audio data, thus obtaining a comparison value; and
   - if said comparison value surpasses a predefined threshold, determining a false positive and therefore rejecting said detection of said wakeup word.

The control means is therefore configured for performing the part of the method discussed above that correspond to the wakeup-enabled device.

The invention also refers to a system for determining false positives in a wakeup-enabled device, characterized in that said system comprises:
- a wakeup-enabled device as defined above; and
- at least one audio-emitting external device;
wherein said at least one external device is configured for:
- receiving said outbound request for data sent from said wakeup-enabled device; and
- emitting a response to said outbound request for data comprising second audio data corresponding to audio that has been played by said external device.

The technical effects and advantages for the wakeup-enabled device and system are the same that have already been discussed above in the case of the method so, for the sake of conciseness, they will not be repeated hereinafter. It is also to be noted that the particular embodiments of the method may be also envisaged for the system and/or the wakeup-enabled device.

The invention also includes other detail features illustrated in the detailed description of some embodiments of the invention and in the accompanying figures.

### Brief description of the figures

Further advantages and features of the invention will become apparent from the following description, in which, without any limiting character, preferred embodiments of the invention are disclosed, in reference to the accompanying figures:
Fig. 1 is a block diagram of the components of the system of the invention.
Fig. 2 is a block diagram of different steps of the method according to one embodiment.

### Detailed description of embodiments o the invention

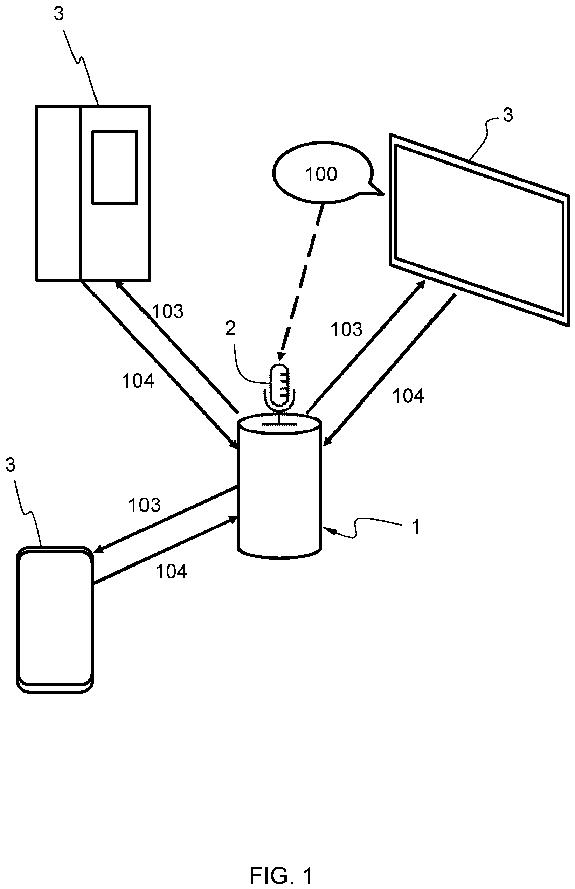

Fig. 1 shows a simplified block diagram of a system for determining false positives in a wakeup-enabled device 1 according to a first embodiment of the invention. The system comprises a wakeup-enabled device 1 and at least one audio-emitting external device 3. As an example, Fig. 1 shows three of said audio-emitting external devices 3: a smart TV, a smart refrigerator, and a smartphone. Nevertheless, this example is only illustrative and other devices can be envisaged. Each of the audio-emitting external devices 3 is configured for receiving an outbound request for data 103 sent from the wakeup-enabled device 1; and emitting a response 104 to said outbound request for data 103 comprising second audio data corresponding to audio that has been played by said external device 3.

In the first embodiment, the wakeup-enabled device 1 is a smart speaker having an audio input 2 that has been represented with a microphone. This representation of the microphone is merely conceptual for the sake of clarity since the form and location of the audio input 2 is often incorporated in the body of the smart speaker. Other wakeup-enabled devices 1 may be envisaged within the scope of the invention, as non-limiting examples, a smart TV, a smart watch, a smartphone, etc. The wakeup-enabled device 1 further comprises a communication module, used for communications with the external devices 3. In the case of the first embodiment, said communications module is a wireless communication module, in particular, using Bluetooth LE. Other equivalent wireless communications may be envisaged, as non-limiting examples, Wi-Fi Direct or LTE Direct.

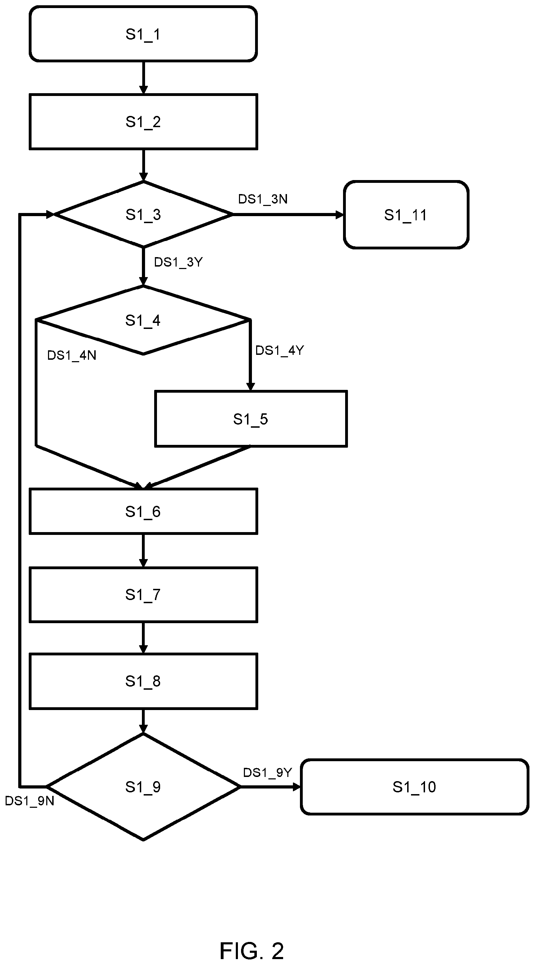

The wakeup-enabled device 1 further comprises a control means. In this example, said control means comprises a microprocessor and a memory module, and is provided with computer software that, when executed by said microprocessor, drives said control means to execute the method according to the invention. In particular, the control means is configured for receiving first audio data from said audio input 2; and detecting a wakeup word 100 from said first audio data. The possible implementations of a procedure for detecting a wakeup word are known in the art. Therefore, for the sake of brevity, will not be described in this document. The control means is configured for executing the method for determining false positives shown in Fig. 2.

| | |
|---|---|
| S1_1: | For each detection of said wakeup word 100: |
| S2_2: | Emitting at least one outbound request for data 103. For the first embodiment, said at least one outbound request for data 103 is a broadcast request for data. The communication module drives the communication module to emit said broadcast request for data, so that it may be received by all the audio-emitting external devices 3 that are in communication range. Said communication range depends, among other factors, on the communication protocol used for communication, the emitting power of the communication module and the sensibility of the communication receptors provided in the external devices 3. In the case of the first embodiment using Bluetooth LE, the typical maximum range is up to 20 meters, but it may also be affected by obstacles like walls or doors. |

The audio-emitting external devices 3 that receive said outbound request for data 103 respond sending each an inbound response 104 to the wakeup-enabled device 1. Each inbound response 104 contains second audio data corresponding to audio that has been played by said audio-emitting external device 3. In the case of the embodiment, said second audio data contains the last two seconds of audio emitted by the corresponding audio-emitting external device 3 before the reception of the outbound request for data 103 by said external device 3. It further contains information about the audio format of said audio data.

In the first embodiment, the supported audio formats of the second audio data are grouped according to a version number:
- Version 0: RAW audio;
- Version 1: Mel-frequency Cepstral Coefficients, MFCCs.
- Version 2: Relevant pairs of spectral peaks, also called landmarks, obtained by Landmark Extraction.

Other embodiments may contain further audio versions, preferably arranged in ascending order based on the accuracy for detecting false positives.

In the case of receiving, by said communication module, at least one inbound response 104 to said at least one outbound request for data 103, for each of said at least one inbound response 104 perform a comparison process as will be described hereinafter.

| | |
|---|---|
| S1_3: | Received a further inbound response 104? |
| DS1_3N: | No. |
| S1_11: | Accept the wakeup word 100. |
| DS1_3Y: | Yes. |
| S1_4: | The second audio data is in version 0 (RAW audio format)? |
| DS1_4Y: | Yes. |
| S1_5: | Convert the second audio data to the audio format corresponding to version 2, thus obtaining a second audio fingerprint of said second audio data. |
| DS1_5N: | No. In this case second audio data already contains said second audio fingerprint pattern. |
| S1_6: | Convert first audio data to the same audio format of second audio data, thus obtaining a first audio fingerprint pattern of said first audio data. |
| S1_7: | Select comparison method according to the version corresponding to the audio format of second audio data (converted in S1_5 if necessary). |
| S1_8: | Compare said first audio fingerprint pattern with said second audio fingerprint pattern using said selected comparison method, thus obtaining a comparison value. |
| S1_9: | Said comparison value surpasses a predefined threshold? |
| DS1_9Y: | Yes. |
| S1_10: | Determining a false positive and therefore rejecting said detection of said wakeup word 100 |
| DS1_10N: | No. |

Therefore, according to the first embodiment, independently for each of said at least one inbound response 104, the second audio fingerprint pattern may be comprised in said second audio data or obtained by said wakeup-enabled device 1 from said second audio data after the reception of said second audio data. In other embodiments of the method, the second audio fingerprint pattern is always obtained by the wakeup-enabled device 1 from the second audio data.

For the first embodiment, comparing said first audio fingerprint pattern with said second audio fingerprint pattern is done by means of a method for measuring similarity between two temporal sequences or audio segments. In particular, in step S1_7, the comparison method is selected according to the audio format of the audio fingerprint patterns. In the case of the first embodiment, for version 1 (MFCC), it uses Dynamic Time Warping, DTW, and for version 2 (landmarks), a method based on looking for equivalent landmarks.

Those skilled in the art will understand that that several comparison methods may be suitable for comparing audio fingerprint patters for the same audio format. The possible methods described herein are non-limiting examples and different methods may be developed in the future that could be used for the invention. When confronted to the selection of specific comparison methods for an audio format, the computational capabilities of the wakeup-enabled device have to be taken into account, for example, in order that comparison process in S1_8 can take place with the minimum possible latency.

For version 1, the first step of the comparison in S2_8 is to compute a matrix of distances between every feature vector in the sequence comprising the first audio fingerprint pattern and every feature vector in the sequence comprising the second audio fingerprint pattern. Using this matrix and optionally further constraints, a path of minimum cost (accumulated distance along the path) can be computed, which represent the best possible alignment between both feature sequences (first and second audio fingerprint). Optional constraints are, for example, the shape of the path, which can be constrained to be close to the main diagonal, meaning in this case that both audio fingerprints have a close time alignment. This minimum cost is the comparison value that is then compared in step S1_9 with a pre-computed optimum threshold to determine if both audio fingerprints correspond to the same audio source.

For version 2, the comparison in S1_8 first looks for equivalent landmarks (pairs of spectral peaks) at the same frequency and having the same time offset, between the first audio fingerprint and the second audio fingerprint. Then, for each landmark pair along first and second fingerprint, time offsets are computed, which should result in a constant value for most of them in order to determine a final match between both fingerprints. The number of matching landmarks between both audio fingerprints is the comparison value that is then compared in step S1_9 with a pre-computed optimum threshold to determine if both audio fingerprints correspond to the same audio source.

In step S1_9, for each comparison method, the specific value of the threshold is determined beforehand through extensive offline tests in order to ensure that a reasonable number of false alarms can be detected, and, at the same time, no intentional wakeups are rejected.

Other embodiments of the method, wakeup-enabled device and system according to the invention are disclosed hereinafter. These embodiments share most of the features disclosed in the first embodiment above. Therefore, only the differentiating features will be described in detail. For the sake of brevity, common features shared with the first embodiment disclosed above will not be described again hereinbelow.

In a second embodiment, step S1_6 further verifies if a first audio fingerprint pattern for the same version of audio format is stored in the memory. If yes, that will be the first audio fingerprint pattern used in step S1_8. If not, a first audio fingerprint pattern for said version of audio format is obtained and stored in the memory.

In a third embodiment, step S1_6 is done before step S1_3 for versions 1 and version 2 of the audio format, so that an audio fingerprint pattern corresponding to version 1 and an audio fingerprint pattern corresponding to version 2 are calculated and stored in the memory for latter comparisons in step S1_8.

In a fourth embodiment, the system further comprises a peer discovery process, done prior to step S1_1. In this embodiment, the wakeup-enabled device sends a broadcast request for registration using the communication module. Several communications protocols may be used for this peer discovery process, among them Bluetooth LE, Wi-Fi Direct or LTE Direct. The external devices 3 that are in range, receive said request for registration, and then establish a communication with the wakeup-enabled device 1. The wakeup-enabled device 1 determines that each of those external devices 3 that establish said communication is a registered external device. In step S2_2, the wakeup-enabled device 1 sends one outbound request for data 103 to each of said registered external devices and also sends the broadcast request for data.

In a fifth embodiment, derived from the fourth embodiment, in step S2_2, the wakeup-enabled device 1 sends one outbound request for data 103 to each of said registered external devices but does not send the broadcast request for data.

In a sixth embodiment, derived from the fourth or the fifth embodiment, the peer discovery further comprises the external device 3 sending information about its audio capabilities, in particular, information about the possible formats of the audio data that said external device is able to transmit. In this embodiment, the possible formats are version 0, version 1, or version 2. The information about audio capabilities may also include the possible buffer length of the second audio data. The wakeup-enabled device 1 stores said information about the audio capabilities of each registered external device, and the outbound request for data 103 for each registered external device comprises an indication of the audio format to use, based on the audio capabilities of the registered external device. If the external device is able to provide audio in different formats, the wakeup-enabled device indicates the highest version available, being version 0, 1 or 2.

In a seventh embodiment, derived from the fourth or the fifth embodiment, the peer discovery further comprises the external device 3 sending information about its audio capabilities, in particular, information about the possible formats of the audio data that said external device is able to transmit. In this embodiment, the possible formats are version 0, version 1, or version 2. The information about audio capabilities may also include the possible buffer length of the second audio data. The wakeup-enabled device 1 stores said information about the audio capabilities of each registered external device. The peer discovery further comprises a step wherein the wakeup-enabled device 1 informs to the registered external device 3 about the audio format that must be used when the external device 3 sends the inbound response (104) comprising second audio data, based on the audio capabilities of the registered external device. If the external device is able to provide audio in different formats, the wakeup-enabled device indicates the highest version available, being version 0, 1 or 2.

An eight embodiment combines the features of the third and sixth or seventh embodiments: step S1_6 is done before step S1_3 for versions 1 and version 2 of the audio format, so that an audio fingerprint pattern corresponding to version 1 and an audio fingerprint pattern corresponding to version 2 are calculated and stored in the memory for latter comparisons in step S1_8. In the cases where the outbound request for data is sent only to the registered external devices, if none of said registered external devices is able to provide audio in version 1 or in version 2, the corresponding version is not calculated in step S1_6.

In a ninth embodiment, derived from any of the fourth, fifth, sixth or seventh embodiments, the communication between the wakeup-enabled device 1 and said at least one external device 3 uses data protection, in particular, using ITU-T X.509 certificate exchange over encrypted communications channel.

In a tenth embodiment derived from any of the preceding embodiments, the supported audio formats may include any of the following:
- Linear Prediction Coefficients, LPC;
- Perceptual Linear Prediction, PLP;
- Profiles of energy and/or fundamental frequency of audio frames;
- Audio fingerprints obtained from a neural network; and
- Audio embeddings, preferably, i-vector or d-vector;

The corresponding comparison method is selected depending on the audio format. Some comparison methods can be used regardless of the audio formats. For example, DTW could be used with any audio format leading to a sequence of feature vectors, if they present the same frame rate in both audio fingerprints, e.g., MFCC, LPC, PLP. Similarly, audio embeddings of different types (i-vector, d-vector, etc.) can be compared through Cosine Distance Scoring or Probabilistic Linear Discriminant Analysis (PLDA), yielding a value that represents the likelihood of both audio samples coming from the same source.

## Claims

1. Computer implemented method for determining false positives in a wakeup-enabled device (1) having an audio input (2), said wakeup-enabled device (1) configured for obtaining first audio data from said audio input (2) and detecting a wakeup word (100) from said first audio data;
**characterized in that**, for each detection of said wakeup word (100) by said wakeup-enabled device (1), the method comprises the following steps:
- emitting at least one outbound request for data (103);
in the case of receiving at least one inbound response (104) to said at least one outbound request for data (103), each inbound response (104) comprising second audio data corresponding to audio that has been played by an external device (3), for each of said at least one inbound response (104):
- comparing a first audio fingerprint pattern of said first audio data with a second audio fingerprint pattern of said second audio data, thus obtaining a comparison value;
- if said comparison value surpasses a predefined threshold, determining a false positive and therefore rejecting said detection of said wakeup word (100).

2. Method according to claim 1, **characterized in that** said second audio data comprises the audio data corresponding to the 5 seconds or less before said inbound response (104), preferably the last 2 seconds.

3. Method according to any of claims 1 or 2, **characterized in that** emitting said at least one outbound request for data (103) and/or receiving at least one inbound response (104) is done by means of a wireless data communication system, preferably Bluetooth LE, Wi-Fi Direct or LTE Direct.

4. Method according to any of claims 1 to 3, **characterized in that** said at least one outbound request for data (103) comprises a broadcast request for data (103).

5. Method according to any of claims 1 to 4, **characterized in that** the method further comprises:
- at least one external device (3) establishing a communication with said wakeup-enabled device (1);
- said wakeup-enabled device (1) determining said external device (3) as a registered external device, thereby determining at least one registered external device;
and preferably, wherein said at least one outbound request for data (103) comprises an outbound request for data (103) to each of said at least one registered external device.

6. Method according to claim 5, **characterized in that** said wakeup-enabled device (1) is further configured for storing information about the audio capabilities of each of said registered external devices, in particular, at least the possible formats of said second audio data.

7. Method according to any of claims 5 or 6, **characterized in that** said communication between said wakeup-enabled device (1) and said at least one external device (3) uses data protection, preferably at least an authentication method, more preferably, ITU-T X.509 certificate exchange over encrypted communications channel.

8. Method according to any of claims 1 to 7, **characterized in that** said first audio fingerprint pattern and said second audio fingerprint pattern are both obtained by means of a feature extraction method for audio, preferably one of:
- Mel-frequency Cepstral Coefficients, MFCC;
- Linear Prediction Coefficients, LPC;
- Perceptual Linear Prediction, PLP;
- Profiles of energy and/or fundamental frequency of audio frames;
- Relevant pairs of spectral peaks, obtained by Landmark Extraction;
- Audio fingerprints obtained from a neural network; and
- Audio embeddings, preferably, i-vector or d-vector;
wherein the feature extraction method is the same for obtaining said first audio fingerprint pattern and for obtaining said second audio fingerprint pattern.

9. Method according to any of claims 1 to 8, **characterized in that**, independently for each of said at least one inbound response (104), said second audio fingerprint pattern may be comprised in said second audio data or obtained by said wakeup-enabled device (1) from said second audio data after the reception of said second audio data.

10. Method according to any of claims 1 to 9, **characterized in that** comparing said first audio fingerprint pattern with said second audio fingerprint pattern is done by means of a method for measuring similarity between two temporal sequences or audio segments.

11. Wakeup-enabled device (1) comprising:
- an audio input (2);
- a communication module;
- a control means;
wherein said control means is configured for:
- receiving first audio data from said audio input (2); and
- detecting a wakeup word (100) from said first audio data;
**characterized in that** said control means is further configured for:
- for each detection of said wakeup word (100) driving said communication module to emit at least one outbound request for data (103); and
- in the case that said communication module receives at least one inbound response (104) to said at least one outbound request for data (103), each response (104) comprising second audio data corresponding to audio that has been played by an external device (3), for each of said at least one inbound response (104):
- comparing a first audio fingerprint pattern of said first audio data with a second audio fingerprint pattern of said second audio data, thus obtaining a comparison value; and
- if said comparison value surpasses a predefined threshold, determining a false positive and therefore rejecting said detection of said wakeup word (100).

12. System for determining false positives in a wakeup-enabled device (1), **characterized in that** said system comprises:
- a wakeup-enabled device (1) according to claim 11; and
- at least one audio-emitting external device (3);
wherein said at least one external device (3) is configured for:
- receiving said outbound request for data (103) sent from said wakeup-enabled device (1); and
- emitting a response (104) to said outbound request for data (103) comprising second audio data corresponding to audio that has been played by said external device (3).
